Europäisches Patentamt

European Patent Office

Office européen des brevets

(19)

(11) Veröffentlichungsnummer : **0 206 123**
**B1**

(12) # EUROPÄISCHE PATENTSCHRIFT

(45) Veröffentlichungstag der Patentschrift :
07.09.88

(51) Int. Cl.⁴ : **F 16 H 47/08**

(21) Anmeldenummer : 86107981.2

(22) Anmeldetag : 11.06.86

(54) Schaltvorrichtung für ein hydrodynamisch-mechanisches Getriebe.

(30) Priorität : 21.06.85 DE 3522184

(43) Veröffentlichungstag der Anmeldung :
30.12.86 Patentblatt 86/52

(45) Bekanntmachung des Hinweises auf die Patenterteilung : 07.09.88 Patentblatt 88/36

(84) Benannte Vertragsstaaten :
DE FR GB IT

(56) Entgegenhaltungen :
EP-A- 0 039 936
DE-A- 2 743 581
DE-A- 2 743 583
DE-B- 1 214 967
GB-A- 2 037 383
US-A- 3 314 307
US-A- 4 346 622

(73) Patentinhaber : VOLKSWAGEN AKTIENGESELL-
SCHAFT
D-3180 Wolfsburg (DE)

(72) Erfinder : Honig, Ernst-August, Dipl.-Ing.
Engelsgarten 1
D-3180 Wolfsburg 18 (DE)
Erfinder : Kalversberg, Manfred
Grenzweg 10
D-3180 Wolfsburg 13 (DE)
Erfinder : Schmidt, Dieter, Ing. grad.
Grosser Kamp 32
D-3170 Gifhorn (DE)
Erfinder : Hagemann, Gottfried, Ing. grad.
Am Mühlengraben 22
D-3180 Wolfsburg 1 (DE)
Erfinder : Kaspar, Lothar, Ing. grad.
Hubertusring 6
D-3180 Wolfsburg 23 (DE)
Erfinder : Oberpichler, Gerd, Ing. grad.
Oldenburger Strasse 5a
D-3300 Braunschweig (DE)

0 206 123

**Beschreibung**

Die Erfindung bezieht sich auf eine Schaltvorrichtung für ein hydrodynamischmechanisches Getriebe für Kraftfahrzeuge gemäß dem Oberbegriff des Patentanspruchs 1.

Bei einem derartigen bekannten Getriebe (DE-A-27 43 583) soll der direkte dritte Getriebegang durch fahrgeschwindigkeitsabhängige Betätigung der ersten und der zweiten und/oder der dritten Kupplung in der Weise realisiert werden, daß bis zu einer mittleren, vorgegebenen Fahrgeschwindigkeit des Fahrzeugs der hydrodynamische Gang und bei Überschreitung dieser mittleren Fahrgeschwindigkeit der mechanische oder leistungsverzweigte Gang eingeschaltet ist. Da aber bei automatischen Getrieben der dritte Gang, wie im übrigen auch die anderen Gänge, üblicherweise je nach Leistungsanforderung bei unterschiedlichen Fahrgeschwindigkeiten automatisch zugeschaltet wird, kann somit bei dem bekannten Getriebe, falls die Umschaltung von dem zweiten in den dritten Getriebegang erst oberhalb der vorgegebenen mittleren Fahrgeschwindigkeit erfolgt, auch sofort der mechanische oder leistungsverzweigte Gang eingerückt sein. Dies kann aber unkomfortable Schaltvorgänge zur Folge haben, da der leistungsverzweigte und insbesondere der mechanische dritte Gang relativ starre Verbindungen zwischen dem Antriebsmotor und den Antriebsrädern darstellen, so daß im Antriebsstrang auftretende Stöße verhältnismäßig ungedämpft weitergeleitet werden. Zum anderen kann dabei auch die Notwendigkeit entstehen, während des Gangwechsels gleichzeitig zwei zuvor ausgerückte Schaltglieder einzurücken, was einen erheblichen Steuerungsaufwand bedeutet.

Durch die DE-AS 1 214 967 ist ein hydrodynamisches 3 Gang-Schaltgetriebe, insbesondere für Kraftfahrzeuge, bekannt geworden, bei dem der dritte oder direkte Getriebegang auch schon wahlweise hydromechanisch, also unter Einschluß des Drehmomentwandlers, rein mechanisch unter Umgehung des Drehmomentwandlers oder auch leistungsgeteilt, also durch Leistungszufuhr sowohl über den Drehmomentwandler als auch unter Umgehung desselben, betrieben werden kann. Bei dem dort beschriebenen Getriebe sind diese drei Möglichkeiten aber offenbar nur über besondere Schaltstellungen der Getriebesteuerung erreichbar, wobei der mechanische Gang bei Überlandfahrt auf normaler Strecke, der dritte Gang mit Leistungsteilung dagegen vorwiegend für Überlandstrecken mit geringer Steigung oder verkehrsreiche Landstraßen verwendet werden soll. Damit wird dem Fahrzeugführer die Auswahl der dem jeweiligen Betriebszustand des Fahrzeugs angepaßten Schaltstellung für den dritten Getriebegang überlassen, die dieser dann für den jeweiligen Betriebszustand auch unverändert beibehalten wird.

Die der Erfindung zugrundeliegende Aufgabe besteht darin das gattungsgemäße Getriebe derart weiter zu bilden, daß die drei Schaltmöglichkeiten für den dritten Getriebegang zweckmäßig und vorteilhaft in die üblicherweise automatisch erfolgende Schaltung eines derartigen hydrodynamisch-mechanischen Getriebes eingegliedert sind, um damit eine bequeme Fahrweise mit komfortablen Schaltübergängen zu erreichen. Weiter soll die Getriebesteuerung vereinfacht werden, so daß bei den Schaltübergängen nur jeweils ein Schaltglied aus- und ein anderes eingerückt zu werden braucht.

Die Lösung dieser Aufgabe erfolgt gemäß dem Kennzeichen des Patentanspruchs 1. Die Erfindung sieht also eine ganz bestimmte Schaltfolge in dem dritten oder direkten Getriebegang vor, die automatisch abläuft, indem beim Hochschalten immer zunächst der rein hydrodynamische Gang und anschließend erst der mechanische Gang eingeschaltet wird, während ein leistungsverzweigter Gang erst kurz vor dem Hochschalten in den vierten Getriebegang eingeschaltet wird. Der mechanische dritte Getriebegang kann dabei, wie dies an sich bekannt ist, in Abhängigkeit von der Fahrgeschwindigkeit eingeschaltet werden, so daß bei relativ niedrigen Fahrgeschwindigkeiten der rein hydrodynamische Getriebegang eingeschaltet bleibt. Beim Zurückschalten kann dagegen im umgekehrten Sinne vorgegangen werden, indem dann zunächst kurzzeitig ein leistungsverzweigter und anschließend erst der mechanische oder hydrodynamische Gang eingeschaltet wird.

Durch diese Schaltabfolge wird erreicht, daß beim Hochschalten vom zweiten in den dritten Getriebegang nur ein Schaltglied ab- und ein zweites zugeschaltet werden muß und daß durch die dann zunächst vorliegende rein hydrodynamische Drehmomentübertragung noch eine gute Dämpfung der Ungleichförmigkeiten des Motordrehmoments erreicht wird. Wenn im Anschluß an diese Einschaltung des hydrodynamischen Ganges, beispielsweise bei Überschreitung einer bestimmten vorgegebenen Geschwindigkeit des Fahrzeugs, zusätzlich zu den beiden ersten Kupplungen noch die dritte Kupplung eingerückt wird, wird durch die damit erreichte Übertragung des Drehmoments unter Umgehung des Drehmomentwandlers zwar eine starrere Verbindung des Antriebsmotors mit den angetriebenen Fahrzeugrädern erreicht, was unter Umständen eine weniger komfortable Übertragung des Drehmomentes bedeutet. Dafür aber wird auf diesem rein mechanischen Übertragungsweg eine Reduzierung der sonst im Drehmomentwandler auftretenden Verluste erreicht, so daß eine verbrauchsgünstigere Betriebsweise des Fahrzeugs möglich ist. Kurz vor dem Umschalten in den vierten Getriebegang, bei dem dann neben der dritten Kupplung nur noch eine Bremse eingerückt ist, soll erfindungsgemäß der leistungsverzweigte dritte Gang durch Ausrücken der ersten oder zweiten Kupplung eingeschaltet werden. Auch dieses bedeutet einen komfortableren Schaltübergang, da zum einen die Drehmomentübertragung durch den wieder hinzugezogenen Drehmomentwandler zumindest teilweise gedämpft ist. Zum zweiten läßt sich die Umschaltung von dem dritten in den vierten Getriebegang dann, wenn nur ein Schaltglied aus- und ein anderes zugeschaltet zu werden braucht, wesentlich einfacher steuern.

2

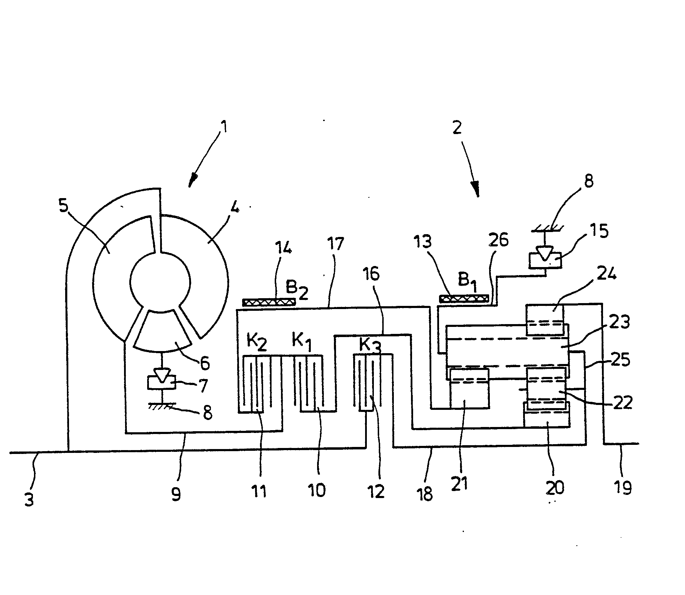

In der Zeichnung ist anhand eines schematischen Schaltbildes ein Ausführungsbeispiel des zugrundeliegenden hydrodynamisch-mechanischen Kraftfahrzeuggetriebes angedeutet, das im folgenden näher beschrieben wird.

In der Zeichnung ist mit 1 ein hydrodynamischer Drehmomentwandler und mit 2 ein dem Drehmomentwandler nachgeschaltetes Planeten- oder Umlaufrädergetriebe bezeichnet, das das von einem hier nicht weiter gezeigten Antriebsmotor kommende Drehmoment zu den hier ebenfalls nicht gezeigten Antriebsrädern eines Kraftfahrzeugs, insbesondere eines Personenkraftfahrzeugs, weiterleitet.

Der Drehmomentwandler 1 besteht im wesentlichen aus einem von einer Motorwelle 3 angetriebenen Pumpenrad 4, einem Turbinenrad 5 und einem mittels eines Freilaufes 7 an einem ortsfesten Gehäuse 8 abgestützten Leitrad 6. Das Turbinenrad 5 ist mit einer hohlen Turbinenwelle 9 verbunden, die über eine erste Kupplung 10 (K1) mit einem ersten Sonnenrad 20 und über eine zweite Kupplung 11 (K2) mit einem zweiten Sonnenrad 21 des Planetengetriebes 2 verbindbar ist. Die Verbindung zwischen den Kupplungen und den Sonnenrädern wird dabei durch Verbindungsstege 16 und 17 vorgenommen.

Das Planetengetriebe 2 weist weiter mehrere über den Umfang verteilt angeordnete erste Planetenräder 22 und zweite Planetenräder 23 auf, die jeweils miteinander im Eingriff stehen. Während die ersten Planetenräder 22 darüberhinaus mit dem ersten Sonnenrad 20 kämmen, stehen die zweiten Planetenräder 23 sowohl mit dem zweiten Sonnenrad 21 als auch mit einem Ringrad 24 in Eingriff, das mit einer zu dem hier nicht gezeigten Achsgetriebe des Kraftfahrzeugs führenden Abtriebswelle 19 verbunden ist.

Die ersten und zweiten Planetenräder 22, 23 sind auf einem Planetenträger 25 gelagert, der einerseits über einen Arm 26 und einen Freilauf 15 an dem Getriebegehäuse 8 abgestützt ist und der andererseits über einen Verbindungssteg 18 und eine dritte Kupplung 12 (K3) direkt mit dem zentral durch die Turbinenwelle 9 geführten Antriebswellenstummel 3a verbindbar ist.

Mit 13 und 14 sind hier als Bandbremsen ausgeführte erste und zweite Bremsen angegeben, von denen die erste Bremse 13 (B₁) an dem Arm 26 des Planetenträgers 18 und die zweite Bremse 14 (B₂) an dem die drei Kupplungen 10, 11 und 12 glockenförmig umgreifenden, mit dem zweiten Sonnenrad 21 verbundenen Verbindungssteg 17 angreift.

Mit diesem in der Zeichnung schematisch gezeigten Getriebe lassen sich nun durch entsprechende Betätigungsansteuerung der Schaltglieder vier Vorwärtsgänge und ein Rückwärtsgang entsprechend der nachstehenden Tabelle einschalten, wobei mit « x » die in dem jeweiligen Gang eingerückten Schaltglieder gekennzeichnet sind.

Schalttabelle

| Schaltglied / Gang | $K_1$ 10 | $K_2$ 11 | $K_3$ 12 | $B_1$ 13 | $B_2$ 14 | F 15 |
|---|---|---|---|---|---|---|
| 1 | x | — | — | (x) | — | x |
| 2 | x | — | — | — | x | — |
| 3 H | x | x | — | — | — | — |
| 3 M | x | x | x | — | — | — |
| 3 LT 1 | x | — | x | — | — | — |
| 3 LT 2 | — | x | x | — | — | — |
| 4 | — | — | x | — | x | — |
| R | — | x | — | x | — | — |

Nach dieser Tabelle wird in dem ersten Vorwärtsgang die erste Kupplung 10 betätigt, wodurch die Turbinenwelle 9 mit dem ersten Sonnenrad 20 des Planetengetriebes 2 verbunden ist. Die Drehmomentreaktion des Planetengetriebes erfolgt dabei über den Planetenträger 18, der während der Beschleunigungsperiode durch den Freilauf 15 festgelegt ist. Diese Bremswirkung kann, insbesondere beim Lastbetrieb, zusätzlich durch die Bremswirkung der ersten Bremse 13 unterstützt werden, die eine Bremswirkung in beiden Drehrichtungen und damit auch einen Motorbremsbetrieb ermöglicht. Üblicherweise ist diese erste Bremse 13 in der mit dem Getriebewählhebel einstellbaren Stellung « 1 », in der allein der erste Getriebegang eingerückt ist und alle anderen Gänge gesperrt sind, eingeschaltet.

Der zweite Getriebegang wird demgegenüber bei eingeschalteter erster Kupplung 10 durch Festlegung des zweiten Sonnenrades 21 mit Hilfe der zweiten Bremse 14, die den glockenartigen Verbindungssteg 17 festlegt, eingestellt. Die Drehmomentübertragung erfolgt in diesem Fall von dem ersten Sonnenrad 20 auf das Ringrad 24 über die ersten Planetenräder 22 und die zweiten Planetenräder

3

23, die an dem zweiten feststehenden Sonnenrad 21 kämmen. Der Planetenträger 25 läuft in diesem Fall frei mit.

Der dritte und direkte Getriebegang kann bei dem erfindungsgemäßen Getriebe nun auf vier verschiedene Arten erreicht werde, nämlich entweder durch Einschaltung der ersten und zweiten Kupplung 10, 11, wobei wegen des Antriebs beider Sonnenräder 20 und 21 von der Turbinenwelle 9 her eine Verblockung des gesamten Planetengetriebes 2 auftritt. Da bei dieser Drehmomentübertragung der Drehmomentwandler 1 eingeschaltet bleibt, können in dem Antriebsmotor entstehende Ungleichförmigkeiten des Drehmomentes gedämpft werden. Diese Gangeinschaltmöglichkeit ist in der Tabelle mit 3 H (H = hydraulisch) bezeichnet.

3 M (M = mechanisch) deutet dagegen eine Schaltmöglichkeit für den dritten Getriebegang an, bei der das Drehmoment unter Umgehung des Drehmomentwandlers 1 direkt von der Motorantriebswelle 3 zum Planetengetriebe 2 und von diesem über die Abtriebswelle 19 zu den Rädern des Fahrzeugs geleitet wird. In diesem Fall ist neben den beiden ersten Kupplungen auch die dritte Kupplung 12 eingerückt, wobei das Antriebsmoment allein über den Antriebswellenstummel 3a und die dritte Kupplung 12 auf den Planetenträger 25 des mittels der beiden eingerückten Kupplungen 10 und 11 im Block umlaufenden Planetengetriebes 2 geleitet wird.

In der dritten und vierten mit 3 LT$_1$ und 3 LT$_2$ (LT = Leistungsteilung) angegebenen Schaltmöglichkeit für den dritten Getriebegang ist eine der beiden ersten Kupplungen, im Fall LT$_1$ die zweite Kupplung 11 und im Fall LT$_2$ die erste Kupplung 10, im Vergleich zu 3 M ausgerückt, so daß sich eine Drehmomentübertragung mit Leistungsverzweigung durch Teilüberbrückung des Drehmomentwandlers 1 ergibt. Hierbei wird ein Teil des von der Antriebswelle 3 kommenden Drehmoments über den Drehmomentwandler 1 und die Turbinenwelle 9 sowie eine der beiden Kupplungen 10 oder 11 und der andere Teil des Drehmoments unter Umgehung des Drehmomentwandlers 1 direkt über den Antriebswellenstummel 3a, die dritte Kupplung 12, den Verbindungssteg 18 und den Planetenträger 25 in das Planetengetriebe 2 eingespeist.

Im vierten Getriebegang ist neben der dritten Kupplung 12 die zweite Bremse 14 zur Festlegung des zweiten Sonnenrades 21 geschlossen. Die Drehmomentübertragung erfolgt hierbei unter Umgehung des Drehmomentwandlers 1 direkt über die dritte Kupplung 12 in den Planetenträger 25 des Planetengetriebes 2. Der Abtrieb über das Ringrad 24 ist dabei ins Schnelle übersetzt, das heißt die Abtriebswelle 19 dreht mit höherer Drehzahl als die antreibende Motorwelle 3.

Im Rückwärtsgang schließlich ist die zweite Kupplung 11 und die erste Bremse 13 eingerückt, wodurch bei festgehaltenem Planetenträger 25 das zweite Sonnenrad 21 angetrieben wird, das nach Drehrichtungsumkehr in den zweiten Planetenrädern 23 das Drehmoment an das Ringrad 24 abgibt.

Üblicherweise erfolgt nun das Schalten der einzelnen Getriebegänge automatisch in Abhängigkeit von der Fahrgeschwindigkeit und dem beispielsweise durch die Fahrpedalstellung angezeigten Leistungswunsch des Fahrzeugführers, indem eine hier nicht weiter gezeigte Getriebesteuerung die Druckmittelbeaufschlagung der einzelnen Schaltglieder steuert. Ein üblicherweise vorgesehener Handwählhebel ermöglicht die Auswahl von bestimmten Fahrbereichsstufen, in denen neben einer Parkstellung, in der das Getriebe blockiert ist, und einer Neutralstellung, in der kein Getriebegang eingerückt ist, im allgemeinen eine Rückwärtsfahrstellung « R » und mehrere Vorwärtsfahrstufen, nämlich mindestens eine Fahrstufe « D » für Dauerfahrt, in der alle Getriebegänge automatisch geschaltet werden, und eine Fahrstufe « 1 » vorgesehen sind, in der nur der erste Getriebegang eingeschaltet ist und alle anderen Getriebegänge gesperrt sind. Zusätzlich können noch weitere Fahrstufen vorhanden sein, in denen zum Beispiel nur die zwei oder drei untersten Getriebegänge geschaltet werden und darüberliegende Getriebegänge gesperrt sind.

Beim automatischen Schalten der Getriebegänge, z. B. in der Normalfahrstufe D, erfolgt nun beim Hochschalten vom zweiten in den dritten Getriebegang zunächst eine Einschaltung des hydraulischen Getriebeganges 3 H, indem anstelle der zweiten Bremse 14, die im zweiten Gang eingelegt war, die zweite Kupplung 22 zugeschaltet wird. Für den Fall, daß eine ausreichend hohe Fahrgeschwindigkeit vorliegt, wird anschließend durch Zuschalten der dritten Kupplung 12 der rein mechanische Übertragungsweg eingeschaltet, der eine wirkungsgrad- und verbrauchsgünstigere Kraftübertragung sicherstellt. Kurz vor dem Hochschalten in den vierten Getriebegang wird dann kurzzeitig durch Ausrücken einer der ersten beiden Kupplungen 10 oder 11, vorzugsweise der zweiten Kupplung 11, der leistungsgeteilte dritte Gang 3 LT$_1$ eingeschaltet, von dem aus dann direkt in den vierten Getriebegang übergegangen wird, indem statt der ersten Kupplung 10 die zweite Bremse 14 eingerückt wird. Beim automatischen Zurückschalten vom vierten in den dritten Getriebegang wird in umgekehrter Weise verfahren, indem zunächst nach Abschalten des vierten Ganges kurzzeitig auf den leistungsverzweigten dritten Gang geschaltet wird, bevor der vollüberbrückte dritte Gang 3 M eingelegt wird. Dabei ist es jedoch zweckmäßig, die Leistungsverzweigung LT$_2$ mit eingeschalteter zweiter und dritter Kupplung 11, 12 zu wählen. Da die zweite Kupplung 11, die die Schaltarbeit beim Gangwechsel auszuführen hat, anders als die erste Kupplung 10 häufig und zweckmäßigerweise auch hier mit einem Akkumulator ausgestattet ist, ergibt sich dann beim Schalten ein weicher, ruckfreier Drehmomentübergang.

Diese beim automatischen Schalten ablaufende Schaltfolge sichert komfortable Schaltübergänge und vereinfacht die Getriebesteuerung, in der bei den Schaltübergängen nur jeweils noch ein Schaltglied aus- und ein anderes eingerückt zu werden braucht.

0 206 123

## Patentansprüche

1. Schaltvorrichtung für ein hydrodynamisch-mechanisches Getriebe für Kraftfahrzeuge, das aus einem Drehmomentwandler (1) und einem nachgeschalteten Planetengetriebe (2) mit einzelnen Getriebeelementen zur Einschaltung verschiedener Getriebegänge zugeordneten, hydraulisch betätigbaren Schaltgliedern besteht, wobei das Planetengetriebe ein erstes, über eine erste Kupplung (K1) mit dem Turbinenrad (5) des Drehmomentwandlers verbindbares Sonnenrad (20), ein zweites, über eine zweite Kupplung (K2) mit dem Turbinenrad verbindbares Sonnenrad (21), einen Planetenträger (25), der über eine dritte Kupplung (K3) unter Umgehung des Drehmomentwandlers direkt mit dessen den Antrieb bildenden Pumpenrad (4) verbindbar ist und auf dem erste und zweite, miteinander und mit den Sonnenrädern im Eingriff stehende Planetenräder (22, 23) gelagert sind, und ein den Abtrieb (19) bildendes Ringrad (24) aufweist, das mit den mit dem zweiten Sonnenrad (21) kämmenden zweiten Planetenrädern (23) im Eingriff steht, wobei durch Blockierung des Planetengetriebes ein direkter dritter Getriebegang entweder auf rein hydrodynamischem Wege unter Einschluß des Drehmomentwandlers durch Einrücken der ersten und zweiten Kupplung (hydrodynamischer Gang) oder auf rein mechanischem Wege unter Umgehung des Drehmomentwandlers durch Einrücken aller drei Kupplungen (mechanischer Gang) oder in Leistungsverzweigungsschaltung durch Einrücken der ersten oder zweiten Kupplung und der dritten Kupplung (leistungsverzweigter Gang) erreichbar ist, dadurch gekennzeichnet, daß beim automatischen Hochschalten vom zweiten in den dritten Getriebegang immer zunächst der hydrodynamische Gang mit eingerückter erster und zweiter Kupplung (10, 11) und erst anschließend der mechanische Gang durch zusätzliches Einrücken der dritten Kupplung (12) einschaltbar ist, und daß kurzzeitig vor dem Umschalten in den vierten Getriebegang einer der leistungsverzweigten Gänge durch Ausrücken der ersten (10) oder zweiten Kupplung (11) einschaltbar ist.

2. Schaltvorrichtung nach Anspruch 1, dadurch gekennzeichnet, daß der mechanische dritte Getriebegang in Abhängigkeit von der Fahrgeschwindigkeit einschaltbar ist.

3. Schaltvorrichtung nach Anspruch 1 oder 2, dadurch gekennzeichnet, daß beim Zurückschalten vom vierten in den dritten Getriebegang zunächst kurzzeitig ein leistungsverzweigter und anschließend erst der mechanische oder hydrodynamische Gang einschaltbar ist.

4. Schaltvorrichtung nach einem der Ansprüche 1 bis 3, dadurch gekennzeichnet, daß wenigstens beim Heraufschalten vom dritten in den vierten Getriebegang der leistungsverzweigte dritte Getriebegang durch Einrücken der ersten und dritten Kupplung (10, 12) geschaltet ist.

5. Schaltvorrichtung nach einem der Ansprüche 1 bis 4, dadurch gekennzeichnet, daß beim Zurückschalten vom vierten in den dritten Getriebegang der leistungsverzweigte dritte Getriebegang durch Einrücken der zweiten und dritten Kupplung (11, 12) geschaltet ist.


## Claims

1. An actuating device for an hydrodynamic-mechanical transmission for motor vehicles, which comprises a torque converter (1) and a planetary gear (2) connected beyond it and having hydraulically operable actuating elements associated with individual transmission elements for engaging different gears, wherein the planetary gear has a first sun wheel (20), which is connectable by way of a first clutch (K) to a turbine wheel (5) of the torque converter, a second sun wheel (21), which is connectable by way of a second clutch (K2) to the turbine wheel, a planetary wheel holder (25), which is directly connectable by way of a third clutch (K3), bypassing the torque converter, to a pump wheel (4), which forms its drive, and on which first and second planetary wheels (22, 23) are mounted, which engage with one another and with the sun wheels, and a ring wheel (24), which forms the output-drive (19) and engages with the second planet wheels (23), which mesh with the second sun wheel (21), wherein a direct third gear can be obtained by blocking the planetary gear, either in a purely hydrodynamic way, with the inclusion of the torque converter, by engaging the first and second clutches (hydrodynamic gear), or in a purely mechanical way, bypassing the torque conveyor, by engaging all three clutches (mechanical gear), or by achieving torque division by engaging the first or second clutch and the third clutch (divided torque gear), characterised in that, when automatically changing up from second to third gear, the hydrodynamic gear is engageable first with the second and third clutches (10, 11) engaged, and the mechanical gear is only subsequently engageable by additionally engaging fourth gear, one of the torque divided gears is engageable by disengaging the first (10) or second (11) clutch.

2. An actuating device as claimed in claim 1, characterised in that the mechanical third gear is engageable in accordance with driving speed.

3. An actuating device as claimed in claim 1 or 2, characterised in that when changing down from fourth to third gear, a torque divided gear is engageable first for a short period, and the mechanical or hydrodynamic gear is only subsequently engageable.

4. An actuating device as claimed in any of claims 1 to 3, characterised in that, at least when changing up from third to fourth gear, the torque divided third gear is actuated by engaging the first and

5

third clutches (10, 12).

5. An actuating device as claimed in any of claims 1 to 4, characterised in that, when changing down from fourth to third gear, the torque divided gear is actuated by engaging the second and third clutches (11, 12).

**Revendications**

1. Dispositif de commande d'une transmission mécano-hydrodynamique pour automobiles, qui comporte un convertisseur (1) de couple et une boîte de vitesses attelée (2) à trains épicycloïdaux pourvue d'organes de commande et d'engagement de rapports différents, actionnés hydrauliquement et correspondant aux différents éléments de la boîte de vitesses, la boîte de vitesses à trains épicycloïdaux étant munie d'un premier pignon central (20) pouvant être relié à la turbine (5) du convertisseur de couple par l'intermédiaire d'un premier embrayage (K1), d'un deuxième pignon central (21) pouvant être relié à la turbine par l'intermédiaire d'un deuxième embrayage (K2), d'un porte-satellites (25) pouvant être relié directement, par l'intermédiaire d'un troisième embrayage (K3), en contournant le convertisseur de couple, à la roue-pompe (4) de ce dernier, cette roue-pompe constituant l'élément d'entrée de la boîte, et le porte-satellites portant des premiers et deuxièmes pignons satellites (22, 23) qui s'engrènent les uns dans les autres ainsi que dans les pignons centraux, et enfin d'une couronne dentée (24) constituant l'élément (19) de sortie de la boîte, la couronne étant en engrènement avec les deuxièmes pignons satellites (23) s'engrenant dans le deuxième pignon central (21), cette boîte de vitesses (2) possédant un troisième rapport direct de vitesse qui peut être obtenu en bloquant la boîte de vitesses à trains . épicycloïdaux, soit par voie purement hydrodynamique, mettant en jeu le convertisseur de couple en engageant le premier et le deuxième embrayage (rapport hydrodynamique), soit par voie purement mécanique, en contournant le convertisseur de couple, par engagement des trois embrayages à la fois (rapport mécanique), soit par voie de transmission divisée de la puissance, en engageant le premier ou le deuxième embrayage et le troisième embrayage (rapport à transmission divisée de la puissance), caractérisé par le fait que, lors des passages automatiques du deuxième au troisième rapport de vitesse, l'on commande systématiquement d'abord le rapport hydrodynamique, en actionnant le premier et deuxième embrayage (10, 11), et ensuite le rapport mécanique, en actionnant en plus le troisième embrayage (12), et que, avant le passage au quatrième rapport de vitesse, l'on commande brièvement l'un des rapports à transmission divisée de la puissance, en désengageant le premier embrayage (10) ou le deuxième embrayage (11).

2. Dispositif de commande selon la revendication 1, caractérisé par le fait que le troisième rapport mécanique de vitesse peut être engagé en fonction de la vitesse du véhicule.

3. Dispositif de commande selon la revendication 1 ou 2, caractérisé par le fait que, lors des rétrogradations du quatrième au troisième rapport de vitesse, l'on commande d'abord brièvement un rapport à transmission divisée de la puissance, et ensuite le rapport mécanique ou hydrodynamique correspondant.

4. Dispositif de commande selon une des revendications 1 à 3, caractérisé par le fait que, lors des passages du troisième ou quatrième rapport de vitesse, au moins, le troisième rapport à transmission divisée de la puissance est obtenu par engagement du premier et du troisième embrayage (10, 12).

5. Dispositif de commande selon une des revendications 1 à 4, caractérisé par le fait que, lors des rétrogradations du quatrième ou troisième rapport de vitesse, le troisième rapport à transmission divisée de la puissance est obtenu par engagement du deuxième et du troisième embrayage (11, 12).